Europäisches Patentamt

European Patent Office

Office européen des brevets

(11) Publication number: **0 092 123**
**A2**

(19)

# EUROPEAN PATENT APPLICATION

(12)

(21) Application number: 83103454.1

(22) Date of filing: 08.04.83

(51) Int. Cl.³: **G 07 C 3/00, F 15 B 21/00**

(30) Priority: 09.04.82 JP 58206/82

(43) Date of publication of application: 26.10.83
Bulletin 83/43

(84) Designated Contracting States: DE FR

(71) Applicant: **HITACHI CONSTRUCTION MACHINERY CO.,
LTD., 2-10, Uchikanda-1-chome, Chiyoda-ku Tokyo (JP)**

(72) Inventor: **Ichiyama, Shuichi, 3-8-4509, Kidamari,
Tsuchiura Ibaragi (JP)**

(74) Representative: **Berg, Wilhelm, Dr. et al, Dr. Berg,
Dipl.-Ing. Stapf, Dipl.-Ing. Schwabe, Dr. Dr. Sandmair
Mauerkircherstrasse 45, D-8000 München 80 (DE)**

(54) Failure prediction system suitable for use in hydraulic system.

(57) Disclosed herein is a failure prediction system suitable for use in a hydraulic system equipped with a hydraulic actuator (2) and a drive circuit (1, 3, 5) therefor. The failure prediction system comprises one or more sensor units (6, 18, 19) provided with at least one of the actuator and circuit or at least one element of their component members to sense at least one parameter, for example, the pressure or temperature of the working oil or the sliding speed of the rod of the actuator while the hydraulic system is driven; operational means (7, 16) adapted to determine the extent of accumulated reduction in service life of the actuator, circuit or element on the basis of one or more correlations pre-established for the actuator, circuit or element between values sensed by the sensor units and their corresponding extents of reduction in service life of the actuator, circuit or element; and output means (7, 16) adapted to output a value corresponding to the extent of accumulated reduction in service life determined by the operational means. Since the above failure prediction system permits to predict how soon the actuator, circuit or element would fail, it is possible to prevent it from actually undergoing failure. The hydraulic system can thus be used without breakdown or malfunction. This is certainly advantageous from the viewpoints of avoiding casualties and damages to surrounding structures and interruption of work. The above failure prediction system also permits to use each element of an actuator or drive circuit until very close to the end of its maximum service life. The failure prediction system is effective particularly for machine tools and construction machines.

DESCRIPTION

Title of the Invention:

FAILURE PREDICTION SYSTEM SUITABLE FOR USE
IN HYDRAULIC SYSTEM

Technical Field:

This invention relates to a failure prediction
system suitable for use in one of various hydraulic systems
each equipped with an actuator and a drive circuit adapted
to drive the actuator such as, for example, machine tools
and construction machinery so as to find out the extent or
extents of fatigue, wearing and/or deterioration of at least
one of the hydraulic actuator and drive circuit or at least
one element of component members of the actuator and drive
circuit, thereby predicting failure of the hydraulic system.

Background Art:

In hydraulic systems such as machine tools, construction machinery and the like, failures such as breakdowns
and/or malfunctions occur due to fatigue, wearing and/or
deterioration of one or more elements of hydraulic cylinders,
hydraulic motors, various hydraulic valves, hydraulic oil
lines and the like which make up the hydraulic systems.
Occurrence of such failures often induce accidents resulting
in injury or death or damages to surrounding structures. Even
if such casualties or damages are avoided luckily,
they are accompanied by such drawbacks that a great deal of
time is required to replace component members or elements,
which have developed the failures, by their corresponding
replacement members or elements and all work relying upon
the thus-failed hydraulic systems must be stopped during the
repair work, leading to significant reduction in work efficiency.
The above drawbacks become more serious if such failures take
place in remote rural areas or overseas.

0092123

It is accordingly very important matter to know the extent of fatigue, wearing and/or deterioration of each element of a hydraulic system before failure of the element actually occurs. Prediction of such a failure permits to replace an element, the service life of said element having reached its limit, by a new element, thereby successfully avoiding casualties, damages, reduction in work efficiency and/or the like and allowing to use the hydraulic system continuously without any problems.

Such a failure prediction system has not been known. Prediction of a failure was totally dependent on an assumption which was made by visual inspection of each element by a man or by measuring the application time of the hydraulic system. Since such a method was, needless to say, incapable of making any precise prediction of failure, it has become routine practice as the second best measure to effect the periodical overall parts replacement by the maker or end user of the hydraulic system. By the way, the extent of progress of fatigue, wearing, deterioration or the like of each element of a hydraulic system varies depending on the use frequency, operation habit and the like of the hydraulic system. However, it is difficult for the maker of each hydraulic system to know how the hydraulic system would be used actually. Therefore, each maker designs, with greater safety factors, hydraulic systems on the assumption that they may be used under severe conditions. However, there is a danger that a hydraulic system would develop a failure prior to its next overall parts replacement if it would be used very severely beyond its maker's assumption. On the contrary, a hydraulic system may be used less frequently than expected or may be used under lighter loads than assumed. In this case, each element is subjected to a smaller extent of fatigue, wearing, deterioration or the like. Even under such use conditions, the element is replaced by a new element whenever the hydraulic system is subjected to overall parts replacement, although such a replacement is not actually necessary. Therefore, such a periodical overall parts replacement is extremely uneconomical. It is also unsuitable because the durability of each element cannot be used up fully. However, due to lack of any suitable failure prediction systems, there was no alternative choice for the prevention of failure other than depending on such a periodical overall parts replacement.

Incidentally, it is known to use such a system that, when a failure occurs, indicates the occurrence of the failure by means of a lamp or the like or gives an auditory alarm by ringing a buzzer. However, such a system is unable to predict failure and does not fall within the scope of the prior art of this invention.

Disclosure of the Invention:

The present invention has been completed in view of the circumstances described above. An object of this invention is thus to provide a failure prediction system suitable for use in a hydraulic system, which failure prediction system is capable of predicting the time at which a failure would occur and preventing on the basis of the prediction casualties, damages to surrounding structures and reduction in work efficiency.

In one aspect of this invention, there is thus provided, for attaining the above object, a failure prediction system suitable for use in a hydraulic system equipped with a hydraulic actuator and a drive circuit adapted to drive said hydraulic actuator, characterized in that said failure prediction system comprises:

one or more sensor units provided with at least one of said hydraulic actuator and drive circuit or at least one element of component members of said actuator and drive circuit and adapted to sense one or more parameters, which reduce the service life of said at least one of said hydraulic actuator and drive circuit or at least one element of the component members of said actuator and drive circuit, while said hydraulic system is driven;

operational means adapted to determine the extent of accumulated reduction in service life of said at least one of said hydraulic actuator and drive circuit or at least one element of the component members of said actuator and drive circuit on the basis of one or more correlations pre-established with respect to said at least one of said hydraulic actuator and drive circuit or at least one element of the component members of said actuator and drive circuit between values sensed by said sensor units and their corresponding extents of reduction in service life of said at least one of said hydraulic actuator and drive circuit or at least one element of the component members of said actuator and drive circuit; and

output means adapted to output a value corresponding to the extent of accumulated reduction in service life determined by said operational means.

In another aspect of this invention, there is also provided a failure prediction system suitable for use in a hydraulic system equipped with a hydraulic actuator and a drive circuit adapted to drive said hydraulic actuator, characterized in that said failure prediction system comprises:

one or more sensor units provided with at least one of said hydraulic actuator and drive circuit or at least one element of component members of said actuator and drive circuit and adapted to sense one or more parameters, which reduce the service life of said at least one of said hydraulic actuator and drive circuit or at least one element of the component members of said actuator and drive circuit, while said hydraulic system is driven;

operational means adapted to determine the extent of accumulated reduction in service life of said at least one of said hydraulic actuator and drive circuit or at least one element of the component members of said actuator and drive circuit on the basis of one or more correlations pre-established with respect to said at least one of said hydraulic actuator and drive circuit or at least one element of the component members of said actuator and drive circuit between values sensed by said sensor units and their corresponding extents of reduction in service life of said at least one of said hydraulic actuator and drive circuit or at least one element of the component members of said actuator and drive circuit;

presetter means adapted to preset, within the critical service life of said at least one of said hydraulic actuator and drive circuit or at least one element of the component members of said actuator and drive circuit, a value with respect to the extent of accumulated reduction in service life;

comparator means adapted to compare a value corresponding to the extent of accumulated reduction in service life determined by said operational means with the value preset by said presetter means;

output means adapted to generate an output when the value corresponding to the extent of accumulated reduction in service life determined by said operational means has reached the value preset by the presetter means; and

notification means actuated by the output from the output means.

Since the failure prediction system according to this invention permits to predict how soon at least one of a hydraulic actuator and drive circuit or at least one element of component members of the actuator and drive circuit would fail, it is possible to prevent it from actually undergoing failure. The hydraulic actuator and drive circuit can thus be used without breakdown or malfunction. This is certainly advantageous from the viewpoints of avoiding casualties and damages to surrounding structures and interruption of work. Use of such a failure prediction system also permit to use each element of the components of the actuator and drive circuit until it almost matures its service life, thereby bringing about another advantage from the econimical viewpoint.

The above and other objects, features and advantages of the present invention will become apparent from the following disclosure and the appended claims, taken in conjunction with the accompanying drawings.

Brief Description of the Drawings:

Fig. 1 is a simplified, schematic, block diagram of a failure prediction system according to one embodiment of this invention, which failure prediction system has been incorporated in a hydraulic system;

Fig. 2 is a characteristic fatigue-life time diagram of one of elements which form the hydraulic system;

Fig. 3 illustrates diagrammatically one manner of occurrence of impact pressures to which the failure prediction system according to the one embodiment of this invention is applied;

Fig. 4 is a systems flowchart of a control unit according to one embodiment of this invention;

Fig. 5 is a flowchart for explaining the operation of the control unit shown in Fig. 4;

Fig. 6 is a systems flowchart of a control unit according to another embodiment of this invention;

Fig. 7 illustrates diagrammatically another manner of occurrence of impact pressures;

Fig. 8 is a flowchart for explaining the operation of the system shown in Fig. 6;

Fig. 9 is a simplified, schematic, block diagram of a failure prediction system according to another embodiment of this invention, which failure prediction system has been incorporated in a hydraulic system;

Fig. 10 is a systems flowchart of the control unit shown in Fig. 9;

Figs. 11(a), 11(b) and 11(c) are characteristic diagrams showing the extents of reduction in service life of a hydraulic cylinder, which makes up a hydraulic system, respectively as functions of the temperature of an oil seal disposed between the rod and cylinder wall of the hydraulic cylinder, the pressure applied to the oil seal and the sliding speed of the rod; and

Fig. 12 is a flowchart explaining the operation of the system shown in Fig. 10.

Best Mode for Carrying Out the Invention:

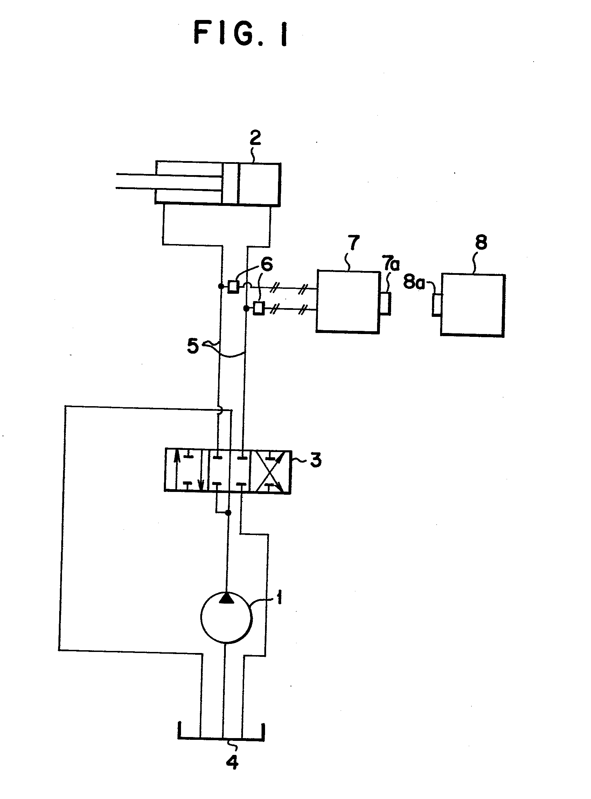

Fig. 1 is a simplified, schematic, block diagram of a failure prediction system according to one embodiment of this invention, which failure prediction system has been incorporated in a hydraulic system. In the drawing, numeral 1 indicates a hydraulic pump and numeral 2 designates a hydraulic cylinder driven by the working oil from the hydraulic pump 1. Designated at numeral 3 is a directional control valve for driving the piston of the hydraulic cylinder 2 at a desired speed in a desired direction. Numeral 4 indicates an oil reservoir, while numeral 5 indicates a line connecting the hydraulic pump 1, hydraulic cylinder 2, directional control valve 3 and oil reservoir 4.

Numeral 6 designates pressure sensing units provided with the line at suitable locations. Designated at numeral 7 is a control unit which receives pressures sensed by the pressure sensing unit 6 as inputs and performs necessary operation. An output terminal of the control unit 7 is shown at numeral 7a.  Numeral 8 indicates an indicator unit adapted
to indicate outputs from the control unit 7 while its input
terminal is shown at numeral 8a.  The indicator unit 8 has been
formed as a separate unit from the control unit 7.

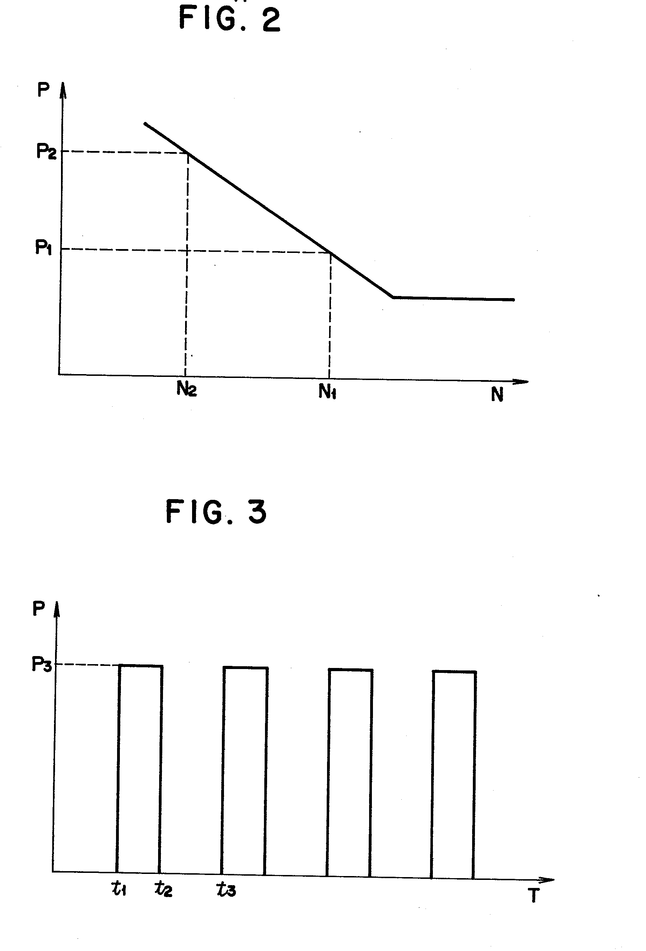

By the way, each of elements making up a hydraulic
system is generally fatigued little by little and eventually
broken down when impact stresses are repeatedly applied to
the element in the course of use of the hydraulic system.
The number of repetition of impact stresses applied until
breakdown varies depending on the impact stresses.  Namely,
the number of repetition of a constant impact stress applied
to an element until its breakdown is different from that of
another constant impact stress, which is different from the
former constant stress, applied to the same element until
its breakdown.  When these constant impact stresses are applied
respectively to elements which are different from the above
element, the numbers of repetitions of the impact stresses
applied to the elements until their breakdown are different
from the above-described numbers.  Here, the relationship
between an impact stress applied repeatedly to an element
and the number of its repetition until breakdown, i.e., a
fatigue-life time curve is illustrated in Fig. 2.  By the way,
the term "impact stress" as used herein means a value of
stress increased at each of repeated applications of the impact
stress.  Since the stress and hydraulic pressure are usually
in a proportional relation, corresponding hydraulic pressures
will be used in place of stresses in Fig. 2 and in the following
description.

In Fig. 2, the number N of repetition of impact
pressures applied to an element until its breakdown (this
number will hereinafter be referred to merely as "the repetition
number) is plotted along the horizontal line while the impact
pressure P exerted on the element is plotted along the vertical
axis.  This fatigue-service life curve may for example be interpreted as follows. When a constant impact pressure $P_1$ is repeatedly applied to the element, the element undergoes breakdown when the number of repetition of the impact pressure has reached $N_1$. On the other hand, when the impact pressure is $P_2$, the curve indicates that the element will be broken down at $N_2$. Such a fatigue-service life curve differs from one element to another.

On the basis of the fatigue-service life curve for the element illustrated in Fig. 2, it will hereinafter be discussed which extent the fatigue of a certain element of a hydraulic system has proceeded to by a given time point. Since the above element undergoes breakdown when the impact pressure $P_1$ has been applied thereto $N_1$ times, the extent of its fatigue is considered to be $1/N_1$ when applied once, $2/N_1$ when applied twice, ...., $n_1/N_1$ when applied $n_1$ times. The extent of accumulated fatigue of the element at a given time point may thus be obtained by multiplying the number of the impact pressure $P_1$ applied from the initiation of use of the element until the given time point with the reciprocal of the number of repetition of the impact pressure $P_1$ required to have the element broken down. Next, let's think of another situation in which two different impact pressures $P_1$, $P_2$ are applied to the element. The extent of fatigue of the element will be $n_1/N_1$ when the impact pressure $P_1$ has been applied $n_1$ times and $n_2/N_2$ when the impact pressure $P_2$ has been applied $n_2$ times. The extent of accumulated overall fatigue of the element from the initiation of use of the element until that time point is thus $(n_1/N_1 + n_2/N_2)$. The element is therefore expected to undergo breakdown when the sum, i.e., $(n_1/N_1 + n_2/N_2)$ has reached 1.

Based on the above-described concept, the first, second and third embodiments of this invention will next be described. The structure illustrated in Fig. 1 is common to the other embodiments except that the structure of a control unit 7 is different from one embodiment to another.

As the first embodiment of this invention, will first of all be described a failure prediction system given in Fig. 1, in which the failure prediction system has been applied to a hydraulic system of a single action as found at a certain part of a certain type of machine tool or working machine. Here, the directional control valve 3 serves to change the moving direction of the piston of the hydraulic cylinder 2 at a constant interval. Fig. 3 illustrates diagrammatically the relationship between pressures applied to a certain element of such a hydraulic system, for example, the line 5, hydraulic cylinder 2 or the like and time. In the diagram, time T is plotted along the horizontal axis whereas pressure P is plotted along the vertical axis. In this hydraulic system, a pressure $P_3$ is produced at a time point $t_1$, the pressure is reduced to zero(0) at a time point $t_2$ and the same pressure $P_3$ is produced again at a time point $t_3$. Then, the pressure changes in the same cycle. In this case, the pressure repeatedly reached during repetition of the above cycle is $P_3$ and the impact pressure is accordingly $P_3$ only.

In the above embodiment, the control unit 7 is formed of a counter. The pressure sensing unit 6 generates a signal in response to the above-described pressure $P_3$ whenever the pressure $P_3$ is produced. The signal is then input to the control unit 7, where a pulse is produced at the rising portion of each pressure signal and the resultant pulse is then fed to the counter. Therefore, the counter keeps count of numbers whenever the pressure $P_3$ is produced, thereby storing the number of the pressure $P_3$ occured by that time. This number of the counter is always ready to be output from a terminal 7a of the control unit 7.

In order to find out the extent of accumulated fatigue of an element to which such a pressure has been applied repeatedly, an inspector such as for example a maintenance service engineer of the manufacturer of the hydraulic system visits the site, where the hydraulic system is installed or used, with a portable indicator unit 8. By connecting an input terminal 8a of the indicator unit 8 to the output terminal 7a of the control unit 7 and operating them to display the number stored in the counter at the indicator unit 8, it is possible to read out the number of the pressure occurred from the initiation of use of the hydraulic system until that inspection. Here, it is possible to know the extent of fatigue of each element of the hydraulic system by multiplying the thus-displayed number of repetition with the reciprocal of the repetition number at the pressure $P_3$ for the element, provided that the repetition number at the pressure $P_3$ for the element has been established beforehand.

The above procedure will be explained using certain simple numerical values by way of example. Let's suppose that the pressure $P_3$ produced in the hydraulic system shown in Fig. 1 is 300 kg and the number of repetition at the same pressure $P_3$ for the hydraulic cylinder 2 is $1 \times 10^5$. Assuming that the number is read out as $8 \times 10^4$ by the indicator unit 8, it is readily known that the extent of fatigue of the hydraulic cylinder is 0.8 because $8 \times 10^4 \times 1/10^5 = 8/10 = 0.8$. Supposing that the inspection of fatigue is effected 2000 hours after the initiation of use of the hydraulic system and the hydraulic system will be used under the same conditions as has been used so far, the hydraulic cylinder 2 is expected to undergo breakdown 500 hours later. Consequently, it can be predicted that the hydraulic system would develop a failure 500 hours later.

Furthermore, it may be possible to preset, in the indicator unit 8, a value corresponding to the extent of fatigue immediately before the critical fatigue. This permits to compare the so-obtained extent of fatigue with the thus-preset value, thereby further facilitating the prediction of failure. It is also feasible to notify that the so-obtained extent of fatigue has reached the preset value and the element is close to its critical fatigue, by turning on a lamp or ringing a buzzer. Where the counter provided with the control unit 7 is a mechanical counter with built-in solenoids, the indicator unit 8 is not required. It is also possible to show the extent of fatigue directly at the indicator unit 8 provided that the counter of the control unit 7 is added with a multiplier which multiplies the so-counted number with the reciprocal of the repitition number for the element.

Since the number of impact pressures occurred can be stored at the counter in the above embodiment, it is possible to predict failure of the hydraulic system and correspondingly to prevent casualties, damages to surrounding structures and reduction in work efficiency. Furthermore, the failure prediction system permits to find out the extent of fatigue of each element of the hydraulic system. Therefore, it is possible to defer the replacement of less-damaged elements until the next overall inspection and repair. This is certainly meritorious from the economical standpoint.

Impact pressures, which occur in a hydraulic system, are not of a single type but of several types. The second embodiment of this invention is applied to a hydraulic system in which impact pressures of one type are of the same level, impact pressures of another type are of the same level which is different from the first-mentioned level, and so on.

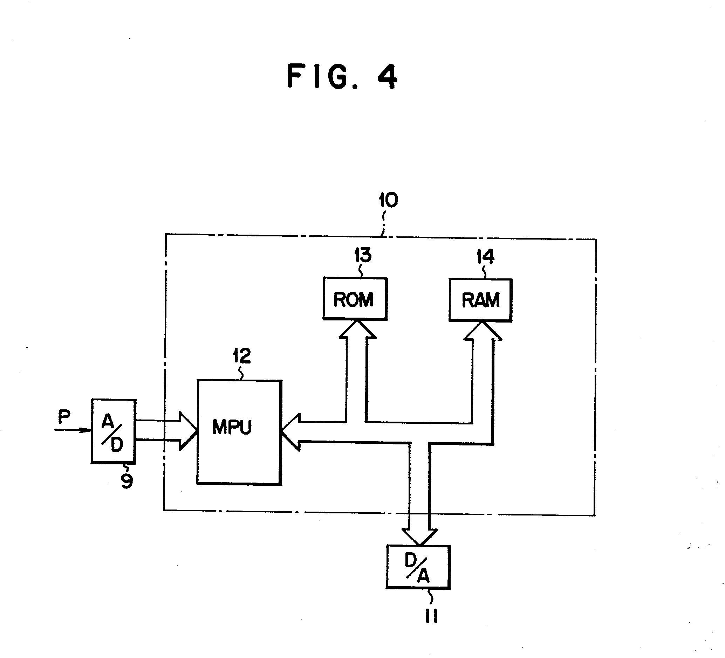

The structure of the control unit 7 in this embodiment is illustrated in Fig. 4. In the drawing, numeral 9 indicates an A/D converter which converts each pressure signal P from the pressure sensing unit 6 into its corresponding digital value. Designated at numeral 10 is a microcomputer and numeral 11 indicates a D/A converter which converts each output of the microcomputer 10 into an analog value. The microcomputer 10 is formed of a microprocesser unit (hereinafter called "MPU") which performs necessary control and operation, a read-only memory (hereinafter called "ROM") 13 which stores the processing program of the MPU 12, a random-access memory (hereinafter called "RAM") 14 which temporarily stores input pressure values, operation results and the like, etc.

Let's now suppose that there are three types of impact pressures occurred in the hydraulic system, i.e., $P_a$, $P_b$ and $P_c$ and the repetition numbers at the above pressures $P_a$, $P_b$ and $P_c$ for an element of the hydraulic system are respectively $N_a$, $N_b$ and $N_c$.

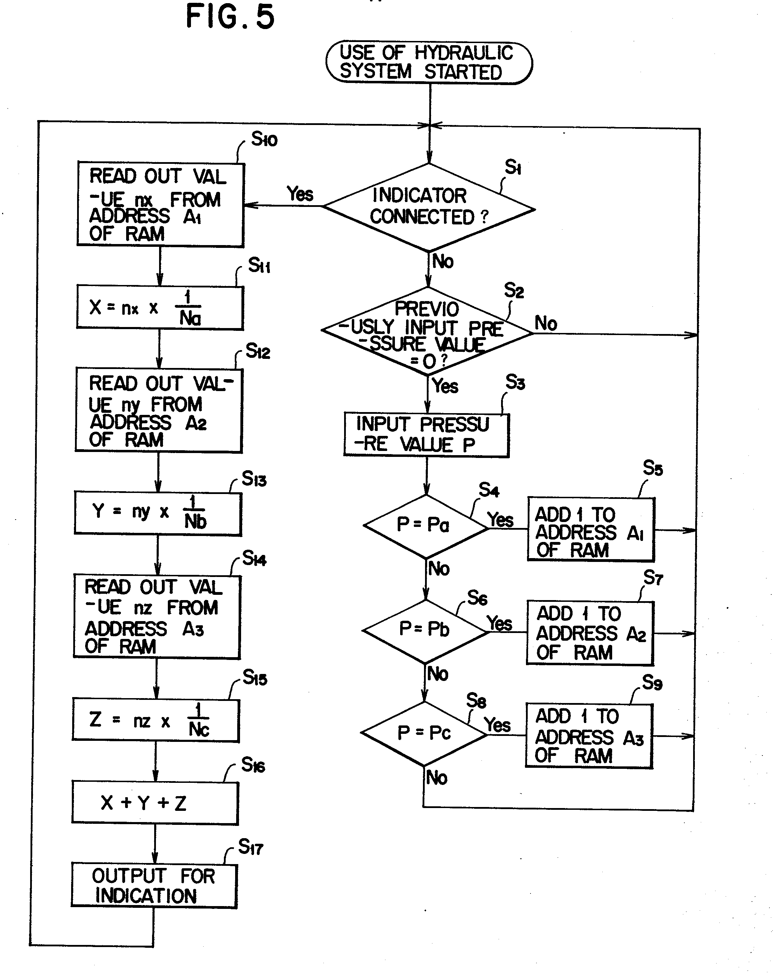

The operation of the above embodiment will next be described with reference to the flowchart shown in Fig. 5.

When the microcomputer 10 is supplied with power from a power source upon initiation of use of the hydraulic system (This power will be kept on or, if turned off, the RAM will be fed with power from a backup power source. This applied equally to subsequent embodiments), the MPU 12 determine in accordance with an instruction from the ROM 13 whether the indicator unit 8 has been connected with the terminal 7a of the control unit 7 (First step $S_1$. Subsequent steps will be expressed as $S_2$, $S_3$ ....). Unless the indicator unit 8 is connected, the MPU 12 then makes a decision whether the pressure input in the preceding cycle of the program is 0 or not ($S_2$). If a pressure has been applied and the pressure is not 0, return to the step $S_1$. If the pressure is 0, each pressure signal P is input through the A/D converter from the pressure sensing unit 6. The MPU 12 compares this pressure signal P with the pressure value $P_a$ ($S_4$) and, when they conform to each other, a numeral value 1 is added to a given address (say, address $A_1$) of the RAM 14 ($S_5$) and the routine then returns to the step $S_1$. Unless $P = P_a$ in the step $S_4$, the input signal is then compared with the pressure value $P_b$ ($S_6$) and, when they conform to each other, 1 is added to the value at another given address (say, address $A_2$) of the RAM 14. Unless $P = P_b$, the input signal is next compared with the pressure value $P_c$ ($S_8$) and,

when they conform to each other, 1 is added to the numeral value at a further given address (say, address $A_3$) of the RAM 14. Unless $P = P_c$ in the step $S_8$ (i.e., when $P = 0$), the routine returns again to the step $S_1$. By following such an operation, the numbers of occurrence of the pressures $P_a$, $P_b$ and $P_c$ are stored respectively at the addresses $A_1$, $A_2$ and $A_3$ of the RAM 14.

When the indicator unit 8 is connected to the terminal 7a of the control unit 7 to check the extent of fatigue of the above-described element of the hydraulic system, the connection of the indicator unit 8 is detected in the step $S_1$. Then, the MPU 12 reads first of all out the value (say, $n_x$) at the address $A_1$ of the RAM 14 in accordance with the instruction from the ROM 13 ($S_{10}$). Then, the reciprocal $1/N_a$ of the repetition number $N_a$ is multiplied to the above value $n_x$ in accordance with the program, thereby calculating a value X ($S_{11}$). This value X is a value corresponding to the extent of fatigue of the element by the pressure $P_a$. The thus-calculated value X is then stored at a suitable address of the RAM 14. Thereafter, the MPU 12 reads out the value (say, $n_y$) at the address $A_2$ of the RAM 14 ($S_{12}$) and multiplies the value $n_y$ with the reciprocal $1/N_b$ of the repitition number $N_b$ to calculate the value Y ($S_{13}$). The value Y is a value corresponding to the extent of fatigue of the element by the pressure $P_b$. Similarly, the value (say, $n_z$) at the address $A_3$ of the RAM 14 is read out ($S_{14}$) and multiplied by the reciprocal $1/N_c$ of the repetition number $N_c$ to calculate the extent of fatigue Z of the element by the pressure $P_c$ ($S_{15}$).

Thereafter, an operation X + Y + Z is performed by the MPU 12 to sum up the thus-calculated values X, Y and Z ($S_{16}$) and the resulting value is output ($S_{17}$). The thus-output value is then fed through the D/A converter 11 and terminal 7a and then displayed at the indicator unit 8. Subsequently, operations similar to steps $S_{10}$ - $S_{17}$ (different only in repeti-

tion number) are to be performed with respect to other elements and the extents of their fatigue are to be displayed successively at their corresponding addresses of the indicator unit 8. The indicator unit 8 may be provided with the same functions as mentioned in the preceding embodiment.

Following the above-described manner, it is possible to know the extent of fatigue of each element of the hydraulic system. By figuring out, with respect to an element which has suffered from the largest extent of fatigue, the time left before it may undergo breakdown, it is feasible to predict the failure of the hydraulic system.

This embodiment does not only enjoy the same effects as the first embodiment but also can bring about another effect that a mere connection of the indicator unit 8 permits to know the extent of fatigue of each element directly.

Next, description will be made on the third embodiment of this invention which employs a hydraulic system featuring extremely irregular occurrence of pressures.

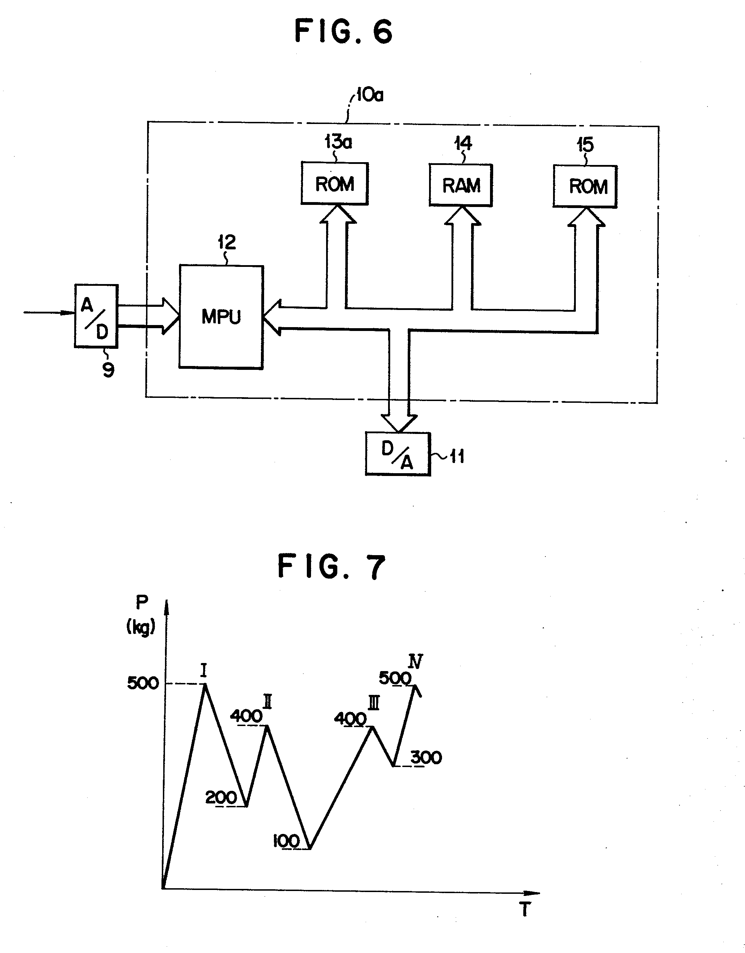

The control unit 7 according to this embodiment is shown in Fig. 6. Description of the A/D converter 9, MPU 12, RAM 14 and D/A converter 11 is omitted in this embodiment, as they are identical to those illustrated in Fig. 4. Numeral 13e indicates an ROM having a program different from that contained in the ROM 13 depicted in Fig. 4. On the other hand, numeral 15 indicates another ROM storing the repetition numbers at various impact pressures on the fatigue-service life curve for each element.

Operation of the failure prediction system according to the third embodiment of this invention will next be described, taking impact pressures as examples of such irregular pressures. Pressures produced in a hydraulic system of for example a construction machine or the like do not return to zero whenever the occurrence of the pressures are repeated, different from the first and second embodiments. In many instances, a pressure occurs before its preceding pressure has been reduced to 0, as shown by way of example in Fig. 7. Here, the impact pressure is equal to the difference between the maximum level and minumum level of each pressure applied repeatedly. Now, this impact pressure is explained with reference to the example shown in Fig. 7. The first(I), second(II), third(III) and fourth(IV) impact pressures are respectively 500 kg(500 - 0), 200 kg(400 - 200), 300 kg(400 - 100) and 200 kg(500 - 300). Where pressures change in the above manner, it is impossible to use pressure signals from the pressure sensing unit 6 directly as impact pressures. Impact pressures are thus obtained in the following manner.

Making reference to the example shown in Fig. 4, pressures sensed by the pressure sensing unit 6 are successively input in the microcomputer 10a through the A/D converter 9. Each of the thus-input values is compared with its preceding input value. This comparison indicates an increment until a first peak value has been reached. After the first peak value has been reached, pressures will be decreased. Here, since the pressure was 0 when the pressure increase was started, the pressure 500 kg at which the pressure was changed from an increase to a decrease is the first(I) impact pressure. From this peak value to the next bottom value (200 kg), the above comparisons indicate decrements. After receiving an input corresponding to the bottom pressure value 200 kg, the pressure rises up again. The bottom value 200 kg is stored in the RAM 14. Until the pressure reaches the next peak value 400 kg, comparison results show increments. After the pressure has reached the peak value 400 kg, comparison results indicate decrements. The value 200 kg stored previously in the RAM 14 is read out and subtracted from the pressure 400 kg, thereby obtaining the second(II) impact pressure of 200 kg. As described above, each impact pressure is obtained by storing a value at which the input pressure has turned from increase to decrease, and then subtracting the thus-stored value from another value at which the pressure has turned from decrease to increase. The third(III) and fourth(IV) impact pressures can be obtained in the same manner.

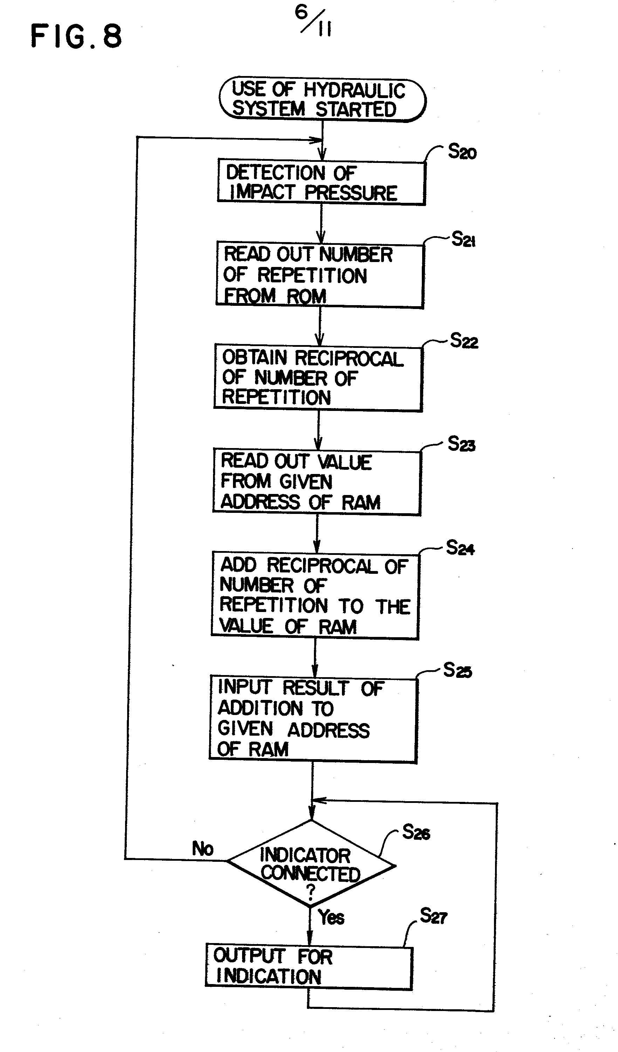

Operation of the microcomputer 10a after occurrence of impact pressures have been sensed as described above will next be explained with reference to the flowchart depicted in Fig. 8.

The MPU 12 reads out, in accordance with an instruction from the ROM 13a, a repetition number ($N_d$) corresponding to the thus-sensed first impact pressure from the ROM 15 and compute the reciprocal of the thus-read out value, namely, $1/N_d$. The reciprocal $1/N_d$ is then stored at a given address ($A_4$) of the RAM 14. When the next impact pressure occurs, the MPU 12 reads out a repetition number ($N_e$) corresponding to the impact pressure from the ROM 15 in the same manner as described above ($S_{21}$), computes its reciprocal ($1/N_e$) ($S_{22}$), reads out the preceding value ($1/N_d$) which has been stored at the given address ($A_4$) of the RAM 14 ($S_{23}$), and adds the reciprocal ($1/N_e$) to the preceding value ($1/N_d$) ($S_{24}$). The value obtained by the above addition is stored as a new value at the given address ($A_4$) of the RAM 14 ($S_{25}$). Thereafter, the same processing as the steps $S_{21}$ - $S_{25}$ is repeated with respect to each of the remaining elements. Values added separately with respect to the elements are stored at their corresponding addresses. After completion of these processing, the MPU 12 makes a decision whether the indicator unit 8 is connected or not ($S_{26}$). When the indicator unit 8 has been connected, it outputs the values stored at their corresponding addresses to the indicator unit 8 separately for one element to another ($S_{27}$). If the step $S_{26}$ makes a decision that the indicator unit 8 is not connected, return to the step $S_{20}$ and sense the next impact pressure.

Accordingly, the reciprocal of a repetition number at each impact pressure for each element is added whenever the impact pressure occurs and the thus-obtained value is then stored at a given address of the RAM 14. Thus, the value at a given address of the RAM 14 at a given time point indicates the extent of fatigue of its corresponding element at that given time point. This will be explained further, using simple numeral values by way of example.

First of all, let's assume that the repetition numbers at impact pressures of 400 kg, 300 kg, 200 kg and 100 kg for an element of a hydraulic system are respectively $1 \times 10^4$, $1 \times 10^5$, $1 \times 10^6$ and $1 \times 10^7$. When the impact pressure 400 kg is first of all sensed, a value $1/10^4$ is stored at a corresponding address of the RAM 14. When the impact pressure 200 kg is next sensed, $1/10^6$ is added to the value $1/10^4$ which has been stored. Namely, the extent of fatigue of the element has reached $(1/10^4 + 1/10^6)$ due to the above-mentioned two impact pressures. Now, supposing that the occurrence of these impact pressures were $1 \times 10^3$ times for the impact pressure of 400 kg, $2 \times 10^4$ times for the impact pressure of 300 kg, $3 \times 10^5$ times for the impact pressure of 200 kg and $2 \times 10^7$ times for the impact pressure of 100 kg from the initiation of use of a hydraulic system until a certain time point, the value stored at the above time point at the corresponding address of the RAM 15 is as follows:

$$\frac{10^3}{10^4} + \frac{2 \times 10^4}{10^5} + \frac{3 \times 10^5}{10^6} + \frac{2 \times 10^6}{10^7}$$

$$= \frac{1}{10} + \frac{2}{10} + \frac{3}{10} + \frac{2}{10} = \frac{8}{10} = 0.8$$

Namely, 0.8 is stored at the corresponding adress of the RAM 14. The pressures change in various ways in an actual hydraulic system and repetition numbers for many different pressures are correspondingly stored in the ROM 15. Since the above example was given merely for explanation, only four types of pressures were referred to.

As apparent from the above example, it is understood that the extent of fatigue of an element at a given time point is represented by a value obtained by summing up values which have in turn been obtained by multiplying the numbers of occurrence of different levels of impact pressures respectively with the reciprocals of the repetition numbers at the different levels of impact pressures for the element. When the indicator unit 8 is connected, this value is converted into an analog value by means of the D/A converter 11 and is then shown at the indicator unit 8. The indicator unit 8 may be provided with the same functions as furnished in the first embodiment.

Once the extent of fatigue of each element is known in the above manner, it is possible to predict the failure of the hydraulic system by figuring out the time until an element showing the greatest extent of fatigue would break down, as has been done in the first embodiment.

Accordingly, the third embodiment of this invention can bring about the same effects as the first and second embodiments.

In each of the embodiments described above, description was made as to prediction of failure under such conditions that each of the elements making up the hydraulic system develops fatigue due to impact pressures produced by hydraulic pressures. The extent of fatigue of such an element may also be determined by sensing, as a cause for developing such fatigue, normally-exerted pressures instead of such impact pressures. In this case, the extent of reduction in service life of the element may be found out    by not only relying upon the normally-exerted pressures but also taking oil pressures and, if the element is a sliding part, sliding speeds into parallel consideration. Due to such parameters as these impact pressure, temperature and speed, the reduction in service life of each element is affected by not only the above-mentioned fatigue but also the wearing and deterioration. In the fourth embodiment of this invention
which will follow, the oil seal disposed between the piston
and cylinder wall in a hydraulic cylinder will be mentioned
as an element affected significantly by the pressure, temperature
and speed so as to describe the way of knowing the extent of
reduction in service life of such an element.

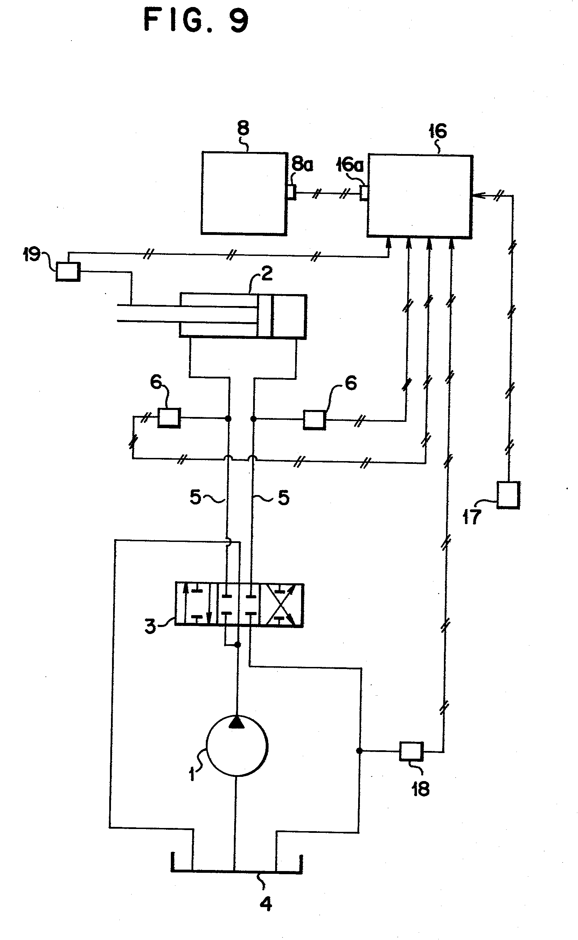

Fig. 9 is a simplified, schematic, block diagram
of a failure prediction system according to the fourth embodiment
of this invention. The same parts as those shown in Fig. 1
are indicated by the same numerals and their explanation is
thus omitted here. Numeral 16' indicates a control unit in
this embodiment. Details of the control unit 16 will be given
later. Numeral 16a indicates an output terminal of the control
unit 16, whereas a clearing instruction switch is shown at
numeral 17. This clearing instruction switch 17 will also be
described later. Designated at numeral 18 is a temperature
sensing unit provided with the line extending between the
directional control valve 3 and oil reservoir 4 and adapted
to sense the temperature of the working oil. Numeral 19 indicates
a speed sensing unit for sensing the moving speed of the rod
of the hydraulic cylinder 2.

Here, description will be made as to influence which
is applied to an oil seal disposed between the piston and
cylinder wall of the hydraulic cylinder 2 due to pressures,
temperatures and speeds. A hydraulic cylinder is generally
constructed in such a manner that the discharge of its working
oil is reduced at each stroke end during its operation,
thereby allowing the oil still remaining in the cylinder
compartments to serve as a cushion and avoiding collision of
the piston against the front and rear end walls of the cylinder.
Such a structure has been known to the public. Reference may
be made to Japanese Patent Laid-open No. 96781/1975. Let's
now suppose that the rod of the hydraulic cylinder 2 has been
extended close to its stroke end. This restricts the discharge of the working oil as mentioned above, thereby causing the pressure to increase promptly in the rod-side compartment and, due to this pressure increase, also causing the temperature of the working oil to go up. Here, the piston has been brought substantially into standstill and the pressure of the working oil in the head-side compartment is thus increased. This pressure increase is sensed by the pressure sensing unit 6 provided with a line connected to the head side. On the other hand, the thus-raised temperature of the working oil is sensed by the temperature sensing unit 18, because the rod-side compartment is in communication with the oil reservoir 4 via the directional control valve 3. The extent of fatigue of the oil seal is further accelerated by such pressure increases and the extent of deterioration of the oil seal is aggravated by such temperature increases. Since the oil seal undergoes sliding movements owing to reciprocation of the piston, the oil seal is subjected to wearing due to its sliding movements caused by the extension of the rod. This wearing is affected by the extension speed of the rod and the extent of wearing of course increases as the speed becomes faster.

As described above, the oil seal develops not only fatigue but also simultaneous wearing and deterioration due to the extension of the rod. Therefore, it is desirous to determine the service life of the oil seal by taking all of these fatigue, wearing and deterioration into consideration. In the present embodiment, pressure values $p_a$, temperature values $\theta$ and speed values v sensed respectively by the pressure sensing unit 6, temperature sensing unit 18 and speed sensing unit 19 are input to the control unit 16, where the extent of reduction in service life of the oil seal is determined and then output to the indicator unit 8.

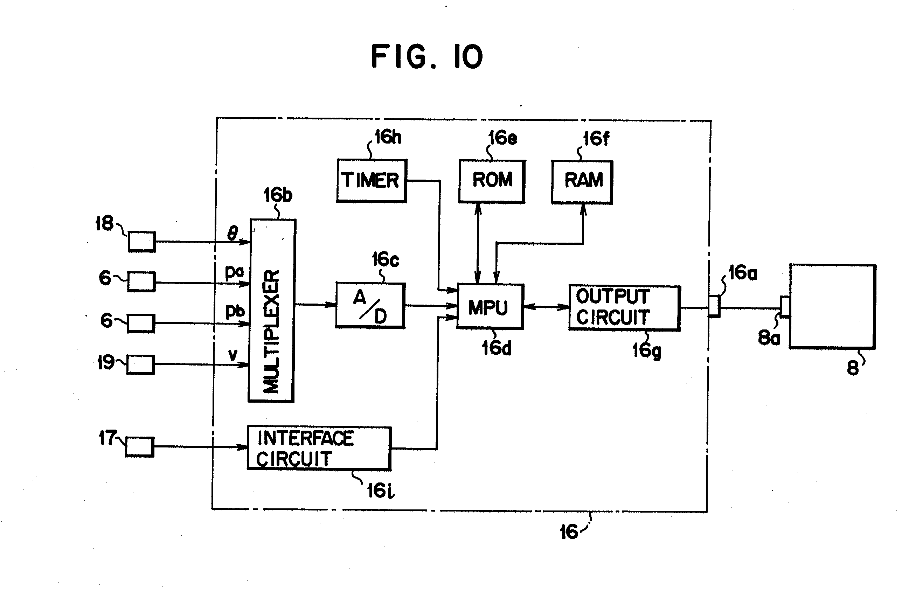

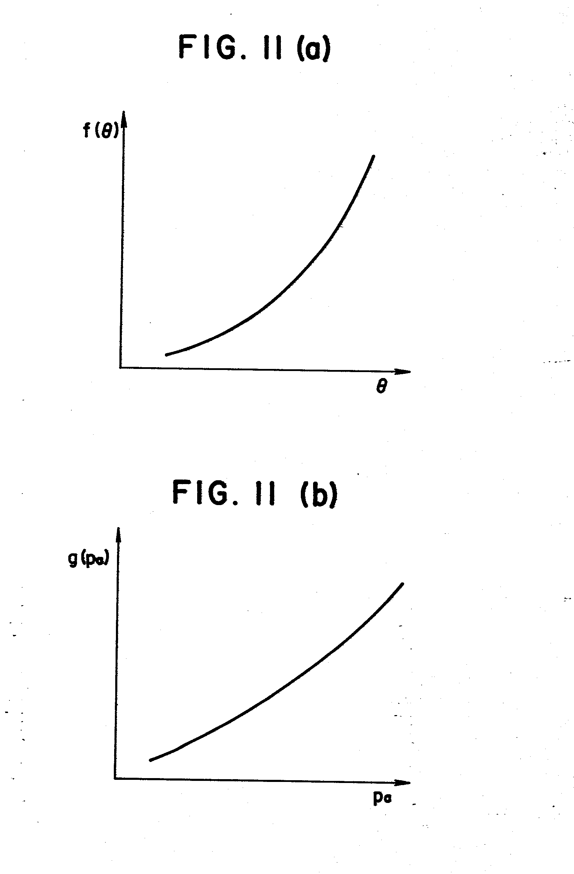

Fig. 10 is a diagram showing the construction of the system of the control unit illustrated in Fig. 9. In the diagram, numeral 16b indicates a multiplexer which inputs successively one after another values sensed by sensor units
6,6,18,19. Numeral 16c indicates an A/D converter which
converts each of input analog values sensed into its corresponding digital value. Designated at numeral 16d is a
microprocessor unit (MPU) of a microcomputer and numeral 16e
indicates a read-only memory (ROM) where a routine for the
operation of the MPU 16d is stored. Besides this routine,
the ROM 16e also stores the extents of reduction in service
life of the oil seal, which extents have been determined for
their corresponding input values in accordance with functions
pre-established for the oil seal. Numeral 16f indicates a
ramdom-access memory (RAM) which stores input values, readout values, values obtained as results of operations, etc.
Designated at numeral 16g is an output circuit which outputs
values obtained as results of operations or stored. A microcomputer is constructed of the MPU 16d, ROM 16e, RAM 16f and
output circuit 16g. Designated at numeral 16h is a timer for
causing interruptions to the microcomputer. Numeral 16i
indicates an interface interposed between the clearing instruction switch 17, which clears the contents of a given address
of the RAM 16f, and the MPU 16d.

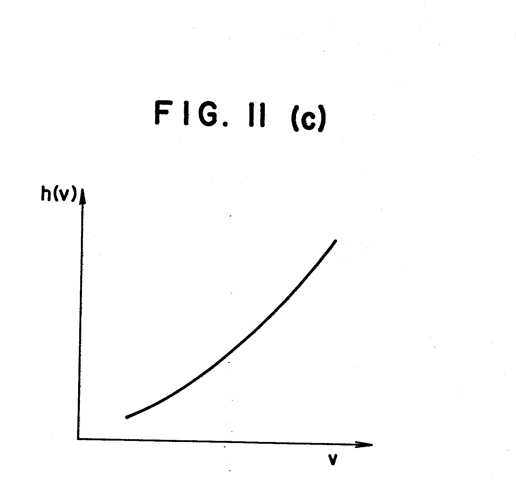

Now, the extents of reduction in service life, which
are stored in the ROM 16e, will be described. Fig. 11(a) is
a characteristic diagram showing the correlation between the
temperature $\theta$ of the working oil and the extent of deterioration
of the material making up the oil seal due to the temperature.
On the basis of the characteristic diagram, it is possible
to obtain values representing extents of deterioration which
values correspond to various temperatures. Similarly, Fig.
11(b) is a characteristic diagram illustrating the correlation
between the pressure $p_a$ and the extent of deterioration of the
oil seal due to the pressure. This characteristic diagram
gives an extent of fatigue corresponding to each pressure. In
addition, Fig. 11(c) is a characteristic diagram depicting the correlation between the sliding speed of the rod and the extent of wearing of the oil seal due to the sliding movement of the rod. It provides an extent of wearing corresponding to each sliding speed of the rod. The extent of each of these deterioration, fatigue and wearing leads to the extent of reduction in service life of the oil seal.

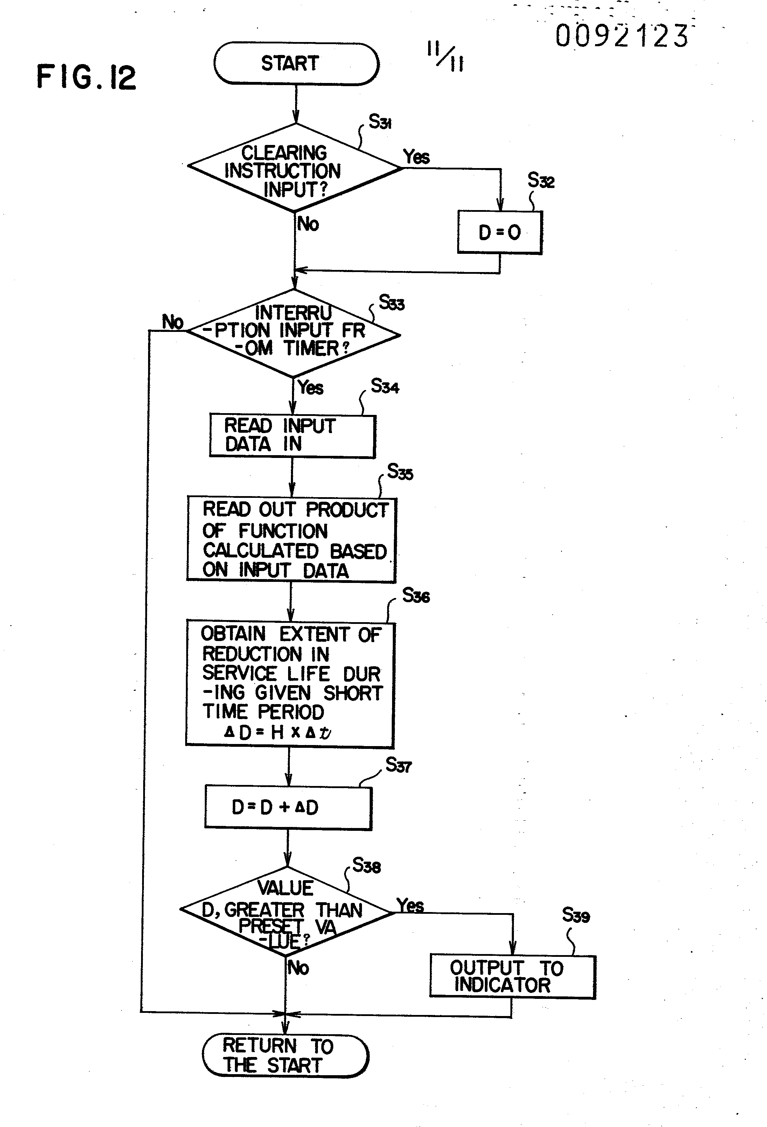

Next, the operation of this embodiment will be described with reference to a flowchart shown in Fig. 12. Upon starting use of the oil seal, the clearing instruction switch 17 is first of all operated to input a clearing instruction signal to the MPU 16d via the interface 16i. The MPU 16d affirms the input of the clearing instruction ($S_{31}$) and clears a value D at a given address (will be described later) so as to obtain D = 0 ($S_{32}$). Then, it is decided whether an interruption signal, which is generated with a preset interval Δt, has been input from the timer 16h. If no interruption signal has been input, return to the operation of the step $S_{30}$. By the way, the decision in the step $S_{33}$ is immediately performed without effecting the operation of the step $S_{32}$ once the use of the oil seal has been started, because no clearing instruction signal is input after the initiation of use of the oil seal. Where an interruption signal has been input from the timer 16h, a value $P_a$ sensed by one of the pressure sensing units 6, a value θ sensed by the temperature sensing unit 18 and a value v sensed by the speed sensing unit 19 are successively fed one after another by the multiplexer 16b and input ($S_{34}$). Thereafter, the extent of deterioration f(θ), extent of fatigue g($p_a$) and extent of wearing h(v) corresponding respectively to the thus-input values are read out in accordance with the characteristic curves shown in Figs. 11(a) through 11(c) from the ROM 16e ($S_{35}$). Then, these values f(θ), g($p_a$) and h(v) are accumulated to obtain a value H. This value H is the extent of reduction in service life of the oil seal at the moment that each of the above values f(θ),

$g(p_a)$ and $h(v)$ has been sensed. Then, by multiplying the value H with the interruption time $\Delta t$, there is obtained $\Delta D = H \times \Delta t$ ($S_{36}$). Here, the value $\Delta D$ means the extent of reduction in service life of the oil seal during the time period $\Delta t$. Values $\Delta D$ obtained in the above manner are successively added to the value D stored at the given address of the RAM 16f and then stored as a new value D at the same address ($S_{37}$). This value D is the extent of reduction in service life of the oil seal, which has been accumulated since the initiation of use of the oil seal. If the upper limit of the extent of reduction in service life of the oil seal, namely, the upper limit of the extent of reduction beyond which upper limit any continued use of the oil seal under the same conditions will result in the breakdown of the oil seal or excess leakage of the working oil through the oil seal and the operation of the oil seal will become unfeasible is predetermined beforehand and is stored at a suitable address of the RAM 16f, it is possible to make a decision whether the value D obtained in the step $S_{37}$ has reached this preset limit ($S_{38}$). If it is decided that the value D has not yet reached the limit, the operation returns again to the step $S_{31}$. If it is decided that the value D has reached the limit, an notification signal is output via the output circuit 16g, the terminal 16a and the terminal 8a of the indicator unit 8 and indicates at the indicator unit 8 that the use of the oil seal has reached its limit. In the present embodiment, an indicator unit is mentioned as notification means. The indication by means of the indicator means may be digital display or visual indication by one or more lamps. This notification means is not necessarily limited to such an indication unit but an auditory device such as buzzer may be used.

In the above description, the oil seal between the piston and cylinder wall of a hydraulic cylinder was chosen as an element for making a prediction of its failure. Needless to say, the system of the present embodiment may be applied
to other elements making up the hydraulic system provided
that functions for determining the extents of reduction in
service life of such elements are extablished. Here, one,
two or all the three of the pressure, temperature and sliding
speed may be chosen, depending on the nature of each of such
elements, as a parameter or parameters governing the extent
of reduction in service life of the element. Functions must
be established for the thus-chosen parameters. In the above-
described embodiment, it is possible to show the value D
directly at the indicator unit without setting a critical
value with respect to the extent of accumulated reduction in
service life. In this case, the indicator unit may be carried
by a maintenance service engineer and coupled with the control
unit whenever necessary. Furthermore, the sliding speed of
the rod of the hydraulic cylinder may be determined by sensing
displacements of the rod. If it is desired to know the extent
of reduction in service life in a momentary time period on
the basis of a plurality of parameters, it is feasible to use
a value obtained in accordance with a pre-established function
from the product of the parameters as a value to be stored in
the ROM.

Since one or more combinations of the parameters,
i.e., pressure, temperature and speed are relied upon to determine
the extent of reduction in service life of a desired element in
the present embodiment as mentioned above, this embodiment can
bring about, with still higher certainly, the same effects as
the preceding embodiments.

Having now fully described the invention, it will be
apparent to one of ordinary skill in the art that many changes
and modifications can be made thereto without departing from
the spirit or scope of the invention as set forth herein.

0092123

## CLAIMS

1. A failure prediction system suitable for use in a hydraulic system equipped with a hydraulic actuator(2) and a drive circuit(1,3,5) adapted to drive said hydraulic actuator, characterized in that said failure prediction system comprises:

one or more sensor units(6,18,19) provided with at least one of said hydraulic actuator and drive circuit or at least one element of component members of said actuator and drive circuit and adapted to sense one or more parameters, which reduce the service life of said at least one of said hydraulic actuator and drive circuit or at least one element of the component members of said actuator and drive circuit, while said hydraulic system is driven;

operational means(7,16) adapted to determine the extent of accumulated reduction in service life of said at least one of said hydraulic actuator and drive circuit or at least one element of the component members of said actuator and drive circuit on the basis of one or more correlations pre-established with respect to said at least one of said hydraulic actuator and drive circuit or at least one element of the component members of said actuator and drive circuit between values sensed by said sensor units and their corresponding extents of reduction in service life of said at least one of said hydraulic actuator and drive circuit or at least one element of the component members of said actuator and drive circuit; and

output means(7,16) adapted to output a value corresponding to the extent of accumulated reduction in service life determined by said operational means.

2. The failure prediction system according to Claim 1, wherein the impact pressure applied to said at least one of said hydraulic actuator and drive circuit or at least one element of the component members of said actuator and drive circuit is sensed as a parameter which reduces the service life of said at least one of said hydraulic actuator and drive circuit or at least one element of the component members of said actuator and drive circuit.

3. The failure prediction system according to Claim 2, wherein the extent of reduction in service life is the reciprocal of the number of repetition of the impact pressure applied to bring said at least one of said hydraulic actuator and drive circuit or at least one element of the component members of said actuator and drive circuit into breakdown.

4. The failure prediction system according to Claim 2, wherein the impact pressure is sensed in terms of pressure increment which occurs when the hydraulic pressure exerted on said at least one of said hydraulic actuator and drive circuit or at least one element of the component members of said actuator and drive circuit is increased.

5. The failure prediction system according to Claim 1, wherein at least one of the hydraulic pressure applied to said at least one of said hydraulic actuator and drive circuit or at least one element of the component members of said actuator and drive circuit, the temperature of working oil passing by said at least one of said hydraulic actuator and drive circuit or at least one element of the component members of said hydraulic actuator and drive circuit and the sliding speed of at least one of sliding elements of the component members of said actuator and drive circuit is sensed as a parameter.

6. The failure prediction system according to Claim 5, wherein the extent of reduction in service life is determined in accordance with a function pre-established with respect to the parameter for said at least one of said hydraulic actuator and drive circuit or at least one element of the component members of said hydraulic actuator and drive circuit.

7. The failure prediction system according to Claim 5, wherein the sensor unit adapted to sense the parameter is a hydraulic pressure sensing unit(6), temperature sensing unit(18) or speed sensing unit(19).

8. The failure prediction system according to Claim 7, wherein said hydraulic pressure sensing unit is provided with a line(5) coupled with said hydraulic actuator.

9. The failure prediction system according to Claim 7, wherein said temperature sensing unit is provided with a line through which the working oil is discharged into an oil reservoir 4.

10. The failure prediction system according to Claim 1, wherein said operational means further comprises adder means for successively adding determined extents of reduction in service life.

11. A failure prediction system suitable for use in a hydraulic system equipped with a hydraulic actuator(2) and a drive circuit(1,3,5) adapted to drive said hydraulic actuator, characterized in that said failure prediction system comprises:
    one or more sensor units(6,18,19) provided with at least one of said hydraulic actuator and drive circuit or

0092123

at least one element of component members of said actuator
and drive circuit and adapted to sense one or more parameters,
which reduce the service life of said at least one of said
hydraulic actuator and drive circuit or at least one element
of the component members of said actuator and drive circuit,
while said hydraulic system is driven;

operational means(7,16) adapted to determine the
extent of accumulated reduction in service life of said at
least one of said hydraulic actuator and drive circuit or
at least one element of the component members of said actuator
and drive circuit on the basis of one or more correlations
pre-established with respect to said at least one of said
hydraulic actuator and drive circuit or at least one element
of the component members of said actuator and drive circuit
between values sensed by said sensor units and their corresponding extents of reduction in service life of said at least
one of said hydraulic actuator and drive circuit or at least
one element of the component members of said actuator and
drive circuit;

presetter means(7,16) adapted to preset, within
the critical service life of said at least one of said hydraulic
actuator and drive circuit or at least one element of the
component members of said actuator and drive circuit, a
value with respect to the extent of accumulated reduction in
service life;

comparator means(7,16) adapted to compare a value
corresponding to the extent of accumulated reduction in service
life determined by said operational means with the value preset
by said presetter means;

output means(7,16) adapted to generate an output
when the value        corresponding to the extent of accumulated
reduction in service life determined by said operational means
has reached the value preset by the presetter means; and

notification means(8) actuated by the output from
the output means.

12. The failure prediction system according to Claim 11, wherein said notification means is a visual indicator.

13. The failure prediction system according to Claim 11, wherein said notification means is an auditory alarm.

0092123

# FIG. 1

2/11

## FIG. 2

## FIG. 3

3/11

# FIG. 4

# FIG. 5

```
                         ┌──────────────────────────┐
                         │  USE OF HYDRAULIC        │
                         │  SYSTEM STARTED          │
                         └──────────────────────────┘
```

**S10**  READ OUT VAL-UE nx FROM ADDRESS A1 OF RAM

**S1**  INDICATOR CONNECTED ?  — Yes →

No ↓

**S11**  $X = nx \times \dfrac{1}{Na}$

**S2**  PREVIO-USLY INPUT PRE-SSURE VALUE = 0 ?  — No →

Yes ↓

**S12**  READ OUT VAL-UE ny FROM ADDRESS A2 OF RAM

**S3**  INPUT PRESSU-RE VALUE P

**S13**  $Y = ny \times \dfrac{1}{Nb}$

**S4**  P = Pa  — Yes → **S5** ADD 1 TO ADDRESS A1 OF RAM

No ↓

**S14**  READ OUT VAL-UE nz FROM ADDRESS A3 OF RAM

**S6**  P = Pb  — Yes → **S7** ADD 1 TO ADDRESS A2 OF RAM

No ↓

**S15**  $Z = nz \times \dfrac{1}{Nc}$

**S8**  P = Pc  — Yes → **S9** ADD 1 TO ADDRESS A3 OF RAM

No ↓

**S16**  $X + Y + Z$

**S17**  OUTPUT FOR INDICATION

# FIG. 6

# FIG. 7

**FIG.8**

USE OF HYDRAULIC
SYSTEM STARTED

S20
DETECTION OF
IMPACT PRESSURE

S21
READ OUT NUMBER
OF REPETITION
FROM ROM

S22
OBTAIN RECIPROCAL
OF NUMBER OF
REPETITION

S23
READ OUT VALUE
FROM GIVEN
ADDRESS OF RAM

S24
ADD RECIPROCAL OF
NUMBER OF
REPETITION TO THE
VALUE OF RAM

S25
INPUT RESULT OF
ADDITION TO
GIVEN ADDRESS
OF RAM

S26
INDICATOR
CONNECTED
?

No

Yes

S27
OUTPUT FOR
INDICATION

# FIG. 9

# FIG. 10

## FIG. II (a)

## FIG. II (b)

$^{10}/_{11}$

# FIG. II (c)

**FIG.12**

START

S31 — CLEARING INSTRUCTION INPUT? —Yes→ S32 — D = O

No

S33 — INTERRU -PTION INPUT FR -OM TIMER? —No

Yes — S34 — READ INPUT DATA IN

S35 — READ OUT PRODUCT OF FUNCTION CALCULATED BASED ON INPUT DATA

S36 — OBTAIN EXTENT OF REDUCTION IN SERVICE LIFE DUR -ING GIVEN SHORT TIME PERIOD

$$\Delta D = H \times \Delta t$$

S37 — $D = D + \Delta D$

S38 — VALUE D, GREATER THAN PRESET VA -LUE? —Yes→ S39 — OUTPUT TO INDICATOR

No

RETURN TO THE START